Europäisches Patentamt

(19) European Patent Office

Office européen des brevets

(11) **EP 0 504 508 B1**

(12) **EUROPEAN PATENT SPECIFICATION**

(45) Date of publication and mention
of the grant of the patent:
**14.02.1996 Bulletin 1996/07**

(51) Int. Cl.$^6$: **A23L 2/38**, A23L 2/04,
A23L 1/337, A23L 1/212,
A23L 1/10

(21) Application number: **91302364.4**

(22) Date of filing: **19.03.1991**

(54) **Powders of plant green juice and process for their production**

Pulver aus grünen Pflanzensäften und Verfahren zu ihrer Herstellung

Poudres de jus de plantes vertes et procédé pour les préparer

(84) Designated Contracting States:
**BE CH DE FR GB IT LI NL SE**

(43) Date of publication of application:
**23.09.1992 Bulletin 1992/39**

(73) Proprietor: **JAPAN NATURAL FOOD Co., Ltd.
Osaka (JP)**

(72) Inventors:
• **Hagiwara, Yoshihide
Takarazuka-shi, Hyogo-ken (JP)**
• **Hagiwara, Hideaki
Takarazuka-shi, Hyogo-ken (JP)**

(74) Representative: **Cresswell, Thomas Anthony et al
London WC1R 5LX (GB)**

(56) References cited:
GB-A- 1 358 052

• **WORLD PATENTS INDEX LATEST Section Ch,
Week 8222, Derwent Publications Ltd., London,
GB; Class D, AN 82-45184 & JP-A- 51 121 563
(Y.HAGIWARA) 24 January 1976**
• **WORLD PATENTS INDEX LATEST Section Ch,
Week 8522, Derwent Publications Ltd., London,
GB; Class D, AN 85-130805 & JP-A-60 006 951
(MINATO SEIYAKU) 17 April 1985**
• **WORLD PATENTS INDEX LATEST Section Ch,
Week 8341, Derwent Publications Ltd., London,
GB; Class D, AN 83-78355 & JP-A- 58 146 255
(NIKKEN FOOD) 31 August 1983**
• **WORLD PATENTS INDEX Section Ch, Week 7946,
Derwent Publications Ltd., London, GB; Class B,
AN 79-83339 & JP-A- 54 129 111 (Y.HAGIWARA) 6
October 1979**
• **PATENT ABSTRACTS OF JAPAN vol. 9, no. 91 (C-
277)19 April 1985 & JP-A- 59 224 674 ( KAGOME
) 17 December 1984**
• **PATENT ABSTRACTS OF JAPAN vol. 7, no. 263
(C-196)24 November 1983 & JP-A-58 146 255 (
OCHI HIROTOMO ) 31 August 1983**
• **WORLD PATENTS INDEX Section Ch, Week 7145,
Derwent Publications Ltd., London, GB,; Class B,
AN 71-72318 & JP-B-46 038 548 (Y.OGIHARA)**

## Description

This invention relates to powders of plant green juice. More specifically, the invention relates to powders of plant green juice having an improved tastiness which are storable for long and a process for their production.

If drying green leaves of any plant usually, this involves such phenomenon that generally the leaves are discolored into yellow or turn brown, etc. Further, it is well known that even if the leaves keep their green color for a short period of time after the production of powders, its dried product loses a green color during storage and involves a change such as browning, degeneration or a change in smell.

The Inventors have hitherto made research works on the powderization of a plant green juice obtained by squeezing any plant having green leaves, its stabilization, its long-term storage method, etc. Its outcomes are reported in a process for producing powders of plant green juice taste having an improved drinkability (Japanese Patent Publication No. 46-36177), a process for producing powders of green leaves of barley and wheat (Japanese Patent Publication No. 46-38548), a process for producing powders of plant green juice (Japanese Patent Publication No. 46-41177) and other numerous scientific literatures.

The green color of green leaves and green plants is chlorophyll. It is also known that chlorophyll is converted into colorless phaeophytin by suffering from an action of ultraviolet rays, an acid, an enzyme (chlorophyllase), etc., in consequence of which a brown color and a red color of xanthophyll, carotenoid, flavonoid pigment and the like become notable.

In the above Japanese Patent Publn. No. 46-38548, etc. the Inventors have proposed a process for producing powders of plant green juice which are free from any unpleasant smell and which may be stored stably for a long period of time by adjusting the pH of the plant green juice obtainable by mechanicallly squeezing green leaves of barley and wheat or green plants to form plant green juice, adjusting the pH of the green juice to be 6-9 with an alkaline substance such as carbonate, bicarbonate or hydroxide of an alkali metal or an alkaline earth metal like sodium carbonate, potassium carbonate, sodium bicarbonate, caustic potash, ammonium hydroxide or magnesium hydroxide and then spray drying or lyophilizing the obtained green juice.

The powders of the plant green juice produced by the above proposed processes can be stored for a relatively long period of time, usually one to two years without causing the green color of the raw green juice to discolor or fade. However, nobody could settle defects as foodstuffs that acid components (various organic acids and an amino acid) contained in the green juice were neutralized by adding the above alkaline substance, thereby to cause a change in the inherent flavor of the green juice in combination with the taste of said alkaline substance per se and to degrade the tastiness of powders of the green juice. Moreover, it has been clarified by subsequent long-term research works that at the time of adding the above alkaline substance the following phenomena are promoted thereby to darken a green color of the green juice and degrade the brightness of a fresh, vivid green color inherent to the juice, i.e. alkali metal chlorination or alkaline earth metal chlorination of chlorophyll contained in the green juice, saponification of fatty acid ester, reddish browning of flavonoid type pigments, etc.

The Inventors made their ardent research works with a view to overcoming the above difficulties involved in adjusting the pH of the plant green juice with the above alkaline substances. As a result, they unexpectedly discovered that if the pH adjustment of the plant green juice is made with a water-soluble alkaline extract obtained from an ashed product of seaweed, not only the above defect could be solved but also there were obtainable stable and long-term storable powders of the plant green juice whose flavors and tastes were improved notably and whose tastes were excellent. This discovery led to the completion of the present invention.

Thus, the present invention provides a powder derived from plant green juice and comprising

(a) a dry powder obtainable by squeezing at least part of at least one fresh raw edible green plant and drying the resulting juice; and
(b) a water-soluble alkaline extract obtained from an ashed product of seaweed, dispersed uniformly in said dry powder,

the pH of an aqueous dispersion of said powder upon dispersion in water being from 6.2 to 9.5.

Further, the invention provides a process for the production of a powder from a plant green juice characterized by adding a water-soluble alkaline extract obtained from an ashed product of seaweed to a plant green juice obtained by squeezing at least part of at least one fresh raw edible green plant to adjust the pH of said plant green juice to 6 to 9 and then spray-drying or lyophilizing the plant green juice.

The present invention will now be explained in more detail.

The green edible plants which are an object of treatment in the invention include not only grown edible plants having green leaves or stems (hereinafter referred to as "leaves and stems") but also edible wild herbs and medicinal plant having green leaves and stems; plants such as fruit vegetables, edible roots, cereals or fruits having leaves and stems which are not usually eaten; green edible seaweeds; etc. Their specific examples may include green leaves of barley and wheat, spinach, lettuce, cabbage, Chinese cabbage, potherb musturd, cucumber, balsam pear, green pepper, green leaves of carrot, green leaves of raddish, parsley, celery, Angelica keiskei Koidz, confree leaves, green leaves of forage grass such as alfalfa, clover or kale, leaves of low striped bamboo, leaves of persimmons, leaves of pine tree, spirulina, chlorella. These plants can be used singly or may be used in combination of two kinds or more. Above all, are suitable green leaves (green stems and leaves) of wheat and barley, especially wheat and barley during or before the full head stage, preferably wheat and barley during or before the heading initiation stage, more preferably wheat and barley in the tillering stage to the head stage, such as green leaves of barley, wheat, naked barley, oat, Italian rye grass, etc. Further, green leaves of the barley in the above stage are optimum.

These wheat and barley can be used singly and can be also used in combination with the above-mentioned other green plants as required.

It is desired that these green plants should be treated while they are as fresh as possible. Further, where using stored leaves, it is desirable to employ those which should be subjected to discoloration and degeneration preventing means such as storage in inert gas, storage at low temperatures, storage after dehydration at reduced pressure or storage after treatment with sulfurous acid gas or sulfite. The green leaves employed as raw material are thoroughly washed to remove any adhering materials. If desired, they are sterilized with a germicide such as hypochlorous acid and further washed fully with water. Further, the washed material is sliced to be any proper size. Where slicing the material, the resultant slices may be used by immersing them in a dilute (for example 0.1-2.0%) saline solution) and then removing water. Further, at any optional stage of this pre-treatment the following treatment may be made, i.e. a blanching treatment is conducted for 2-10 seconds or so at temperatures of 100° to 140° C at ordinary pressure (optionally at reduced or elevated pressure) and then a rapid cooling treatment. This treatment serves to inactivate enzymes (for example, chlorophylase, peroxidase, polyphenoloxidase, etc.) which may constitute one cause of the undesirable discoloration, degeneration of the green plant, etc.

The so pretreated green plant is squeezed after adding a suitable amount of water thereby to extract a juice. This juice extraction can be easily performed in the way already known per se by combining any mechanical pulverization means like mixer or juicer with any means for liquid-solid separation such as centrifugal separation or filtration, pulverizing any edible green plant and then separating coarse solid matters from the pulverized product. In the so obtained green juice of the edible green plant its liquid quality is adjusted to be a pH of 6-9, preferably a range of 6.5-8.5, more preferably a range of 6.5-7.5 in accordance with the present invention by using a water-soluble alkaline extract obtained from an ashed product of seaweed.

The extract may be obtained by heating naturally occurring mineral raw materials contained in seaweeds at temperatures of 300° to 1000°C, preferably 450° to 700°C to make them into an ash and extracting the ashed product with water or an aqueous acid solution.

Examples of the seaweeds available include various kelps (Laminaria), an edible seaweed (Eisenia bicyclis), wakameseaweed (Undaria pinnatifida), kajimeseaweed (Ecklonia cava), a sea lentil (Sargasum fulvellum), a kind of brown algae (Hijikia fusiforme), Eucheuma muricatum and giant kelp. Ashes obtained by ashing these seaweeds are extracted with water or an aqueous acid solution. At the time of this extraction a known process can be used, such as the processes disclosed in the following official gazettes; Japanese Laid-Open (kokai) Patent Publns. Nos. 48-87046, 51-121562 and 51-121563. Examples of the extracts from such seaweed ashes include an extract solution obtained by extracting an ashed product of red algae belonging to Cigartinales of Florideophycidae disclosed in Japanese Laid-Open (kokai) Patent Publn. No. 51-121563 with an aqueous extracting agent like water or an aqueous acid solution or its dried product; an extract solution of the seaweed ash obtained by extracting an ashed product of any seaweed within the whole range of edible seaweeds such as green algae, brown algae or red algae other than the above examples with an aqueous acid solution or its dried product as disclosed in Japanese Laid-Open (kokai) Patent Publn. No. 51-121562; an extract solution of the seaweed ash obtained by extracting an ashed product of any seaweed within the whole range of edible seaweeds such as green algae, brown algae or red algae with an aqueous acid solution or its dried product; an extract solution obtained by combining an alkaline extract solution formed by water-extracting a seaweed ash, with an acidic extract solution obtained by water-extracting a water-insoluble residue formed by water-extraction under acidic conditions of pH 5.0 or less, after adjusting the pH of one of these extracted solutions or the pH of both of these solutions to be in the range of 5.0 to 9.0 and then drying the extract as required or its dried product as disclosed in Japanese Laid-Open (kokai) Patent Publn. No. 48-87046. The above extracts of seaweed ashes show a strong alkalinity usually of pH 9.0 or more, mostly pH 10-12, and contain a variety of useful minerals contained in seaweeds comprehensively and collectively. Moreover, the above extracts exhibit strong buffer properties at the time of their neutralization with an acid. Thus, they proved to be very suitable as a pH controlling agent for the green juice in the present invention.

The above alkaline extract is added to the raw green juice of the above plant for making the pH adjustment of said raw green juice. The extract may be added in the form of an extracted solution or in the form of its dried product. The amount added is so as to adjust the pH of the raw green juice to 6-9, preferably 6.5-8.5, more preferably pH 6.5-7.5.

The raw green juice whose pH has been so adjusted may be subjected to the drying step directly. However, various auxiliary ingredients as stated below can be incorporated before subjecting the green juice to the drying step or optionally before making the pH adjustment, according to the use of the resultant powders of green juice, etc. That is:

(1) A dried powder (including those obtained by age-treating coarse solid matters of fibrous material with dilute acids beforehand and then drying them) of plant fibrous material such as a residue of fibrous material formed after squeezing the above green plant, a residue formed at the time of extracting a fruit juice, a residue formed at the time of squeezing a sugar cane, a residue formed at the time of squeezing vegetables, or water-soluble polysaccharides or mucopolysaccharides obtainable by decomposing these plant fibrous materials with a decomposition enzyme like cellulase.

(2) Lignin sulfonate obtained by decomposing wood chips, a pulp, a saw dust, rice hulls, de-fatted embryo buds, etc. with sodium sulfite or an alkali agent (e.g. caustic soda) to be water-soluble and salts thereof.

(3) A water-extracted product of the water-solubilized matters such as skeltons or cartilages of animals, fishes or the like, condroitin sulfuric acid, heparin, etc.

(4) A fatty-containing emulsion consisting mainly of protein, an emulsion such as cow milk, soybean milk, dry milk or defatted milk and an emulsion consisting of a proper combination of these fats.

(5) Phosphoric acid salts or polyphosphoric acid salts such as ammonium phosphate, diammonium phosphate, potassium phosphate, dipotassium phosphate, tripotassium phosphate, preferably sodium phosphate, disodium phosphate, trisodium phosphate, sodium polyphosphate, sodium metaphosphate, sodium pyrophosphate, potassium polyphosphate, potassium metaphosphate, potassium pyrophosphate, etc.

(6) Nutritive agents such as ascorbic acid, biotin, calcium pantothenate, carotene, chlorinated choline, magnesium oxide, niacin, chlorinated pyridoxine, riboflavin, sodium pantothenate, thiamine hydrochloride, tocopherol, vitamin A, vitamin $B_{12}$, vitamin $D_2$ and the like; masking agents such as sodium metaphosphate, sodium phosphate (primary, secondary and tertiary salts), sodium pyrophosphate, sodium tripolyphosphate and the like; thickeners such as gum arabic, tragacanth, sodium alginate, methyl cellulose, carboxylmethyl cellulose, calcium alginate and the like; solidification inhibitors such as calcium aluminum silicate or calcium silcate; and preservatives such as sorbic calcium, benzoic acid, paraoxymethyl benzoate, sodium benzoate and the like.

(7) Others:, mannitol, sorbitol, lactose, soluble starch, amino acids, dextrose, fruit sugar, dextrin, cyclodextrin, polydextrose and the like.

Further, in the plant green juice treated by the process of the present invention undesirable enzymes pertaining in the discoloration and degeneration can be decomposed or inactivated, and at the same time, the sterilization of bacteria having a possibility to get mixed can also be performed by instantaneously heat treating the green juice in any optional stage after the extraction of green juice but before the drying treatment. This treatment can be performed at normal, reduced or elevated pressures. For example, conditions such as treatment temperatures of 90° to 150° C and treatment time of the order of 180 seconds to 2 seconds according to heating temperatures. After this treatment, it is desirable to cool the juice rapidly especially at a temperature not higher than 10° C.

As above, the plant green juice which pH was adjusted according to the process of the present invention is spray-dried or lyophilyzed as rapidly as possible. The spray drying or lyophylizing operation can be effected in the way already known per se.

For instance, at the time of spray-drying the juice can be spray dried by heating with a hot air at temperatures of the order of 120° to 200° C, preferably at temperatures of the order of 140° to 170° C or at room temperature using a dry air desicated by a suitable desiccant such as lithium chloride. Further, at the time of lyophylizing are usually employed conditions of a dry plate such as a temperature of 40° to 50° C and a vacumm of the order of 1.0 to 0.01 mm Hg.

Moreover, the concentration of green juice to be subjected to a drying step is in a range of the order of 1.5 to 30% and is desirably as high as possible. Therefore, for concentrating the green juice continuous film concentrating devices, vacuum concentrating devices, etc. can be utilized. Further, at the time of working the process of the present invention, if desired, discoloration and degeneration of plant green juice like green juice extracted from green leaves of wheat and barley during transportation or storage can be prevented until it is subjected to a drying step, by the steps, used either alone or in combination, of replacing air with an inert gas such as nitrogen or argon, sealing an oxygen absorbent such as glucoseoxidase, maintaining it at cold temperatures and shutting off light.

In the above drying step there is some case where a low-boiling-point organic acid in the green juice or the like disappears and the pH at the time of dissolving the resultant powder in water usually somewhat increases depending on the drying conditions. Thus, said pH is from 6.2 to 9.5, preferably 6.5-8.5, more preferably 6.5-7.5.

The green juice provided by the present invention seeks to provide an improvement in flavor and taste, by using a water-soluble alkaline extract of seaweed ash as a pH controlling agent, said improvement in flavor and taste being quite unattainable by the use of hitherto used chemical alkaline agents such as sodium carbonate or calcium hydroxide. Thus, the green juice of the present invention has a very rich taste. Moreover, this green juice has excellent stability, compared with powders of green juice produced by the above conventional method. The green juice of the invention can maintain its inherent green color even if stored for a long period of time, e.g. 3 to 4 years. Thus, the green powders of the invention can be offered for drinking directly or after blending with water, warm water, plain soda, cider, cow milk or other beverages. Further, the above green powders can be used by incorporating them in various foodstuffs as food additives. Moreover, they contain not only a wide variety of useful minerals abundantly to be introduced by an alkaline naturally occurring mineral mixture which is added in addition to vitamins and minerals derived from the starting plants but also an essential fatty acid and any other substance having a medicinal effect. They can be utilized effectively in the field of the drugs.

If desired, table salt, sugar, bee honey, glucose and other seasonings or spices can also be incorporated appropriately in the powders of the plant green juice of the invention. Examples of other additives incorporated may include vitamins, antioxidants such as d-isoascrobic acid, 1-isoascrobic acid, propyl gallate, butyl hydroxy anisole or butyl hydroxy toluene, food antiseptics such as dehydroacetic acid and its sodium salt, or benzoic acid and its sodium salt, and emulsifiers such as sucrose fatty acid esters or sorbitan fatty acid esters. The plant green juice of the invention can be formed into granules, pellets, coated tablets, capsules and other various forms.

The present invention will be explained more concretely by way of the following examples.

## EXAMPLE 1

Fresh green leaves of barley were reaped and its 10 Kg was thoroughly washed. The above green leaves were washed well with a liquid of a commercially available cleaner for foods dissolved in a suitable amount of water, dehydrated and pulverized by means of a mixer. By squeezing the green leaves were produced nine liters of green juice (pH of 6.4, containing 410 g of a dried product of the extract). Separately, a dry kelp was made into an ash at 600° C, watered and extracted thereby to prepare a water-extracted solution of the kelp ash. The resultant water-extracted solution was added to the above green juice thereby to neutralize the juice to a pH 7.0. Then its spray-drying was conducted at a blowing temperature of 170° C to produce 405 g of an object green juice powder (yield of about 97%).

## EXAMPLE 2

A total (10 kg) of two kilograms of fresh green leaves of barley, two kilograms of fresh green leaves of wheat, two kilograms of fresh green leaves of rye, two kilograms of spinach, one kilogram of Chinese cabbage and one kilogram of cabbage were washed well in water and squeezed with a juicer thereby to produce 9.5 liters of green juice (pH of 6.3, containing 450 g of a dried product of the extract). While, Eucheuma, one kind of red algae, was dried and made into an ash at 550° C. Water-souble components were extracted thereby to prepare an aqueous strongly alkaline naturally occurring mineral solution of pH 11.2. Using this aqueous solution 9.5 liters of the above green juice was neutralized to be a pH 7.2 and this was concentrated to be three liters by means of a continuous concentrating device. To the concentrate were added 400 g of dextrin and 400 g of lactose. Moreover, 400 g of a water-soluble fiber was added to the mixture, said water-soluble fiber being obtained by adding cellulase to a residue of fibrous material formed after squeezing an orange juice and decomposing it enzymatically. The resultant aqueous mixture was spray-dried thereby to produce 1,460 g of an object green juice powder.

## EXAMPLE 3

A total (10 kg) of one kilogram of green pepper, one kilogram of cucumber, one kilogram of celery, one kilogram of leaves of carrot, two kilograms of spinach and four kilograms of green leaves of barley were washed well in water and extracted with a squeezer thereby to produce 9.5 liters of green juice (pH of 6.1, containing 415 g of a dried product of the extract). Separately, a dry kelp was made into an ash at 600° C, watered and extracted thereby to Prepare an aqueous strongly alkaline naturally occurring mineral solution. To the above green juice was added this aqueous alkaline solution thereby to adjust the pH of the juice to be 6.9. Successively, 400 g of cyclodextrin, 200 g of lactose, 200 g of defatted milk, 100 g of gum arabic powder and 400 g of powders of synthetic water-soluble fiber were added to the juice, followed by mixing them and solving the mixture. The resultant mixture was spray-dried thereby to produce 1,630 g of an object green juice powder.

## EXAMPLE 4

Five kilograms of spinach and five kilograms of green pepper were extracted with a squeezer thereby to produce nine liters of green juice (pH of 6.1, containing 470 g of a dried product of the extract). To this green juice was added an aqueous alkaline naturally occurring mineral soultion having a pH of 11.2 obtained by carbonizing a dry kelp at 700° C and then adding water to elute minerals in the kelp and the pH of the green juice was adjusted to be 7.2. Successively, 100 g of glucose, 50 g of bee honey, 470 g of dextrin, 235 g of defatted milk and 200 g of water-soluble components (mainly water-soluble cellulose) obtainable by boil-sterilizing a mushroom, then adding cellulose to this at 35° C for five hours and then decompositon solubilizng the mixture were mixed and solved. To the resultant mixture were added one gram of vitamin E and five grams of vitamin C. The green juice was further neutralized to be 7.0 with the above aqueous alkaline naturally occurring mineral solution and was lyophylized thereby to produce 1,380 g of an object vagetable powder.

Storage stability testing of green juice powders

As to the storage stability of green juice powders obtained by the above Examples 1-4 the content of chlorophyll was determined in accordance with the following method.

Determination method of chlorophyll

By weighing one gram of a sample 30 ml of 85% acetone is added to the sample. After conducting a supersonic extraction the liquid is allowed to stand and the resultant supernatant is transferred to a beaker. The same operation is repeated until the liquid would not get colored any longer. Whereby the supernatant is collected. The extracted solution is collected. The extracted solution is transferred to a separatory funnel in which 50 ml of ethyl ether is put beforehand and 50 ml of 5% sodium sulfate is added to the funnel. Then the funnel is shaked gently thereby to discharge an aqueous phase. An anhydrous sodium sulfate is added to the funnel and the mixture is dehydrated and filtered. Then ethyl ether is added to the filtrate thereby to bring its total amount to 100 ml exactly. This is used as a sample solution. This sample solution is determined as to the absorbance at 660 nm and 642.5 nm. And the overall chlorophyll content is calculated in accordance with the following formula:

$$\text{Overall chlorophyll (mg/l)} = 7.12 \times A_{660} + 16.8 \times A_{642.5}$$

The results obtained are shown in Table 1 below.

## Table 1

| Example | Overall chloro-phyll content in 100 g | Change in the overall chlorophyll content in 100 g in the storage testing (4°C) | | pH at the time of dis-solving 2 g of the sample in 100 ml of distilled water after two years from production |
|---|---|---|---|---|
| | | After one year | After two years | |
| 1 | 1450 mg | 1420 mg | 1305 mg | pH 7.2 |
| 2 | 290 mg | 284 mg | 275 mg | pH 7.2 |
| 3 | 261 mg | 253 mg | 245 mg | pH 7.3 |
| 4 | 246 mg | 233 mg | 231 mg | pH 7.0 |

Tastiness testing of green juice powders

Three grams of the green juice powder obtained by Example 3 was dissolved in 150 ml of water. And tastiness evaluation testing of the green juice powder was conducted by letting 25 women and 20 men drink the juice.

A comparison of the tastiness was made using a solution of 3 g of the green juice powder obtained by Example 3 dissolved in 150 ml of water and the green juice powder produced by adjusting the green juice to be neutral with $Na_2CO_3$ and NaOH instead of a naturally occurring mineral mixture in the process of Example 3. The results obtained are shown in Table 2 below.

## Table 2

|  | The green juice is fresh, slight and easy to drink | The green juice has a bad smell and hard to drink | The green juice has a soap smell and taste |
|---|---|---|---|
| When adjusting the green juice to be neutral with a naturally occurring mineral (45 persons) | 43 persons | 2 persons | No person |
| When adjusting the green juice to be neutral with $Na_2CO_3$ (45 persons) | 15 persons | 20 persons | 10 persons |
| When adjusting the green juice to be neutral with NaOH (45 persons) | 7 persons | 25 persons | 13 persons |

EP 0 504 508 B1

**Claims**

1. A powder derived from plant green juice and comprising

    (a) a dry powder obtainable by squeezing at least part of at least one fresh raw edible green plant and drying the resulting juice; and
    (b) a water-soluble alkaline extract obtained from an ashed product of seaweed, dispersed uniformly in said dry powder,

the pH of an aqueous dispersion of said powder upon dispersion in water being from 6.2 to 9.5.

2. A powder according to claim 1 obtainable from at least one edible green plant selected from edible grown plants, wild grasses and medicinal plants having green leaves and stems; fruits, vegetables, edible roots, cereals and fruit plants having leaves and stems which are not usually eaten; and green edible seaweeds.

3. A powder according to claim 1 obtainable from green leaves of barley and wheat.

4. A powder according to claim 3 wherein said barley and wheat are selected from barley, wheat, naked barley, oat and Italian rye grass.

5. A powder according to any one of the preceding claims wherein the alkaline extract is obtainable by ashing seaweed at temperatures of 300° to 1,000°C and extracting with water or an aqueous acid solution.

6. A powder according to any one of the preceding claims wherein said extract has a pH of 10 to 12.

7. A powder according to any one of the preceding claims wherein the pH of said dispersion is 6.5 to 8.5.

8. A process for the production of a powder from plant green juice characterized by adding a water-soluble alkaline extract obtained from an ashed product of seaweed to a plant green juice obtained by squeezing at least part of at least one fresh raw edible green plant to adjust the pH of said plant green juice to 6 to 9 and then spray-drying or lyophilizing the plant green juice.

9. A process according to claim 8 wherein the plant green juice derives from at least one edible green plant as defined in any one of claims 2 to 4.

10. A process according to claim 8 or 9 wherein the alkaline extract is as defined in claim 5 or 6.

11. A process according to claim 8, 9 or 10 wherein said plant green juice is subjected to a heat treatment before spray-drying or lyophilizing.

12. A process according to claim 11 wherein said plant green juice is heat treated at 90° to 150°C for 180 to 2 seconds.

**Patentansprüche**

1. Pulver, abgeleitet von dem Saft grüner Pflanzen, und umfassend:

    (a) ein trockenes Pulver, das erhältlich ist durch Auspressen mindestens eines Teils mindestens einer frischen, rohen, eßbaren, grünen Pflanze und Trocknen des erhaltenen Saftes, und
    (b) einen wasserlöslichen alkalischen Extrakt, erhältlich von einem veraschten Produkt von Algen bzw. Seetang, gleichförmig dispergiert in dem trockenen Pulver,

wobei der pH-Wert einer wäßrigen Dispersion dieses Pulvers nach Dispergieren in Wasser 6,2 bis 9,5 beträgt.

2. Pulver nach Anspruch 1, erhältlich aus mindestens einer eßbaren grünen Pflanze, ausgewählt aus eßbaren gezüchteten Pflanzen, wilden Gräsern und medizinischen Pflanzen mit grünen Blättern und Stengeln, Früchten, Gemüse, eßbaren Wurzeln, Getreide und Fruchtpflanzen mit Blättern und Stengeln, die üblicherweise nicht gegessen werden und grünen eßbaren Algen bzw. Seetang.

3. Pulver nach Anspruch 1, erhältlich aus grünen Blättern von Gerste und Weizen.

10

**4.** Pulver nach Anspruch 3, wobei die Gerste und der Weizen ausgewählt sind aus Gerste, Weizen, Nacktgerste, Hafer und italienischem Solch (rye grass).

**5.** Pulver nach einem der vorangehenden Ansprüche, wobei der alkalische Extrakt erhalten wurde durch Veraschen von Algen bzw. Tang bei Temperaturen von 300°C bis 1000°C und Extrahieren mit Wasser oder einer wäßrigen sauren Lösung.

**6.** Pulver nach einem der vorangehenden Ansprüche, wobei der Extrakt einen pH-Wert von 10 bis 12 besitzt.

**7.** Pulver nach einem der vorangehenden Ansprüche, wobei der pH-Wert der Dispersion 6,5 bis 8,5 beträgt.

**8.** Verfahren zur Herstellung eines Pulvers aus dem Saft grüner Pflanzen,
dadurch **gekennzeichnet,** daß
ein wasserlöslicher alkalischer Extrakt, der erhältlich ist aus einem veraschten Produkt, aus Algen bzw. Tang zu einem Saft grüner Pflanzen zugegeben wird, der erhältlich ist durch Auspressen mindestens eines Teils einer frischen, rohen, eßbaren grünen Pflanze, um den pH-Wert des Saftes der grünen Pflanzen auf 6 bis 9 einzustellen und anschließendes Sprühtrocknen oder Lyophilisieren des grünen Pflanzensaftes.

**9.** Verfahren nach Anspruch 8, wobei der grüne Pflanzensaft von mindestens einer eßbaren grünen Pflanze stammt, wie in einem der Ansprüche 2 bis 4 definiert.

**10.** Verfahren nach Anspruch 8 oder 9, wobei der alkalische Extrakt wie in Anspruch 5 oder 6 definiert ist.

**11.** Verfahren nach Anspruch 8, 9 oder 10, wobei der grüne Pflanzensaft vor dem Sprühtrocknen oder Lyophilisieren einer Wärmebehandlung unterworfen wird.

**12.** Verfahren nach Anspruch 11, wobei der grüne Pflanzensaft auf 90°C bis 150°C während 180 bis 2 s erhitzt wird.

**Revendications**

**1.** Poudre dérivée d'un jus de plante verte, qui contient

a) une poudre sèche, que l'on peut obtenir en écrasant au moins une partie d'au moins une plante verte comestible, brute et fraîche, et en desséchant le jus résultant, et
b) un extrait alcalin hydrosoluble, obtenu à partir de cendres d'algues, dispersé uniformément dans ladite poudre sèche,

le pH d'une dispersion aqueuse de ladite poudre, après dispersion dans de l'eau, valant de 6,2 à 9,5.

**2.** Poudre conforme à la revendication 1, que l'on peut obtenir à partir d'au moins une plante verte comestible choisie parmi les plantes cultivées comestibles, herbes sauvages et plantes médicinales possédant des tiges et des feuilles vertes, les fruits, les légumes, les racines comestibles, les céréales, les plantes à fruits dont on ne consomme habituellement pas les feuilles et les tiges, et les algues vertes comestibles.

**3.** Poudre conforme à la revendication 1, que l'on peut obtenir à partir de feuilles vertes d'orge ou de blé.

**4.** Poudre conforme à la revendication 3, pour laquelle ledit orge ou blé est choisi parmi l'orge, le blé, l'orge nu, l'avoine et le ray-grass italien.

**5.** Poudre conforme à l'une des revendications précédentes, pour laquelle on peut obtenir l'extrait alcalin en réduisant des algues en cendres, à une température de 300°C à 1000°C, et en soumettant ces cendres à une extraction réalisée avec de l'eau ou avec une solution aqueuse acide.

**6.** Poudre conforme à l'une des revendications précédentes, dans laquelle le pH dudit extrait vaut de 10 à 12.

**7.** Poudre conforme à l'une des revendications précédentes, dans laquelle le pH de ladite dispersion vaut de 6,5 à 8,5.

**8.** Procédé de production d'une poudre à partir d'un jus de plante verte, caractérisé en ce qu'on ajoute un extrait alcalin hydrosoluble, obtenu à partir de cendres d'algues, à un jus de plantes vertes que l'on a obtenu en écrasant au moins une partie d'au moins une plante verte comestible, brute et fraîche, de manière à ajuster le pH dudit jus de plantes vertes à une valeur de 6 à 9, et en ce qu'on lyophilise ledit jus de plantes vertes ou on le dessèche par pulvérisation.

9. Procédé conforme à la revendication 8, dans lequel le jus de plantes vertes provient d'au moins une plante verte comestible indiquée dans l'une des revendications 2 à 4.

10. Procédé conforme à la revendication 8 ou 9, dans lequel l'extrait alcalin est un extrait conforme à la revendication 5 ou 6.

11. Procédé conforme à la revendication 8, 9 ou 10, dans lequel on soumet ledit jus de plantes vertes à un traitement thermique avant de le lyophiliser ou de le dessécher par pulvérisation.

12. Procédé conforme à la revendication 11, dans lequel ledit jus de plantes vertes subit un traitement thermique à une température de 90°C à 150°C, pendant un laps de temps de 180 secondes à 2 secondes.